(19) Europäisches Patentamt
European Patent Office
Office européen des brevets

(11) Numéro de publication : **0 404 666 B1**

(12) # FASCICULE DE BREVET EUROPEEN

(45) Date de publication du fascicule du brevet : **26.05.93 Bulletin 93/21**

(51) Int. Cl.$^5$ : **C10G 45/64,** B01J 29/04

(21) Numéro de dépôt : **90401729.0**

(22) Date de dépôt : **19.06.90**

(54) **Procédé de deparaffinage catalytique.**

(30) Priorité : **21.06.89 FR 8908358**

(43) Date de publication de la demande : **27.12.90 Bulletin 90/52**

(45) Mention de la délivrance du brevet : **26.05.93 Bulletin 93/21**

(84) Etats contractants désignés : **AT BE DE ES FR GB IT NL**

(56) Documents cités :
**EP-A- 0 104 855**
**EP-A- 0 155 822**
**EP-A- 0 273 816**
**DE-A- 2 755 770**

(73) Titulaire : **INSTITUT FRANCAIS DU PETROLE**
**4, Avenue de Bois Préau**
**F-92502 Rueil-Malmaison (FR)**

(72) Inventeur : **Dufresne, Pierre**
**67, rue Georges Sand**
**F-92500 Rueil Malmaison (FR)**
Inventeur : **Raatz, Francis**
**10, Allée Jacques Prévert**
**F-78260 Acheres (FR)**

**EP 0 404 666 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de traitement de charges pétrolières et, en particulier, de déparaffinage catalytique d'hydrocarbures avec notamment amélioration de la tenue au froid de coupes pétrolières, par exemple d'un kérosène, d'une huile lubrifiante ou d'un gas-oil atmosphérique ou sous-vide.

Dans ses efforts pour accroître la production de produits légers au détriment du fuel résiduel, le raffineur cherche à augmenter le point de distillation final du distillat et du gas-oil. Mais, outre la nécessité de ne pas dépasser une certaine teneur en soufre, la difficulté majeure qui se présente alors concerne la tenue au froid du gas-oil.

En fait, ces caractéristiques sont celles qui la plupart du temps limitent la production de gas-oil ou de fuel domestique. Elles sont définies par deux normes :

- AFNOR n°T 60 105 pour le point d'écoulement (P.E.) et le point de trouble (P.T.)
- AFNOR n° M 07 042 pour la température limite de filtrabilité (T.L.F).

Le point de trouble (exprimé en °C) est la température à laquelle apparaissent les premiers cristaux de paraffine, alors que le point d'écoulement correspond au figeage complet du produit. La température limite de filtrabilité, intermédiaire entre les deux caractéristiques précédentes, est en relation avec la "pompabilité" du gas-oil à travers un filtre dans des conditions standard.

Il est universellement admis que les problèmes posés par la tenue au froid des gas-oils sont liés à leur teneur en paraffines linéaires à longue chaîne, qui varie en général entre 10 et 40% poids.

Une des voies permettant d'améliorer les propriétés d'écoulement des gas-oils consiste à leur incorporer des additifs. Cette technique a des effets limités. En effet, si elle permet de modifier le point de filtrabilité et le point d'écoulement, il est connu qu'elle demeure d'un effet très faible sur le point de trouble. De plus, l'action des additifs est quelquefois très faible sur certains bruts.

On peut obtenir de bons résultats par le déparaffinage catalytique, grâce à un catalyseur à base d'un solide présentant une sélectivité géométrique adéquate. Les solides de structure MFI sont ainsi particulièrement bien adaptés pour laisser diffuser rapidement les paraffines normales par rapport aux isoparaffines. Donc des solides de types MFI permettent de craquer sélectivement les paraffines normales par rapport aux paraffines isomérisées.

DE-A-2755770 décrit un type de ferrisilicate qui en association avec un métal de transition plurivalent et un métal précieux est utilisable dans le déparaffinage catalytique de coupes pétrolières. L'adjonction de fluor au ferrisilicate n'est cependant pas décrite.

La présente invention est relative à un procédé de déparaffinage d'hydrocarbures en présence d'au moins un catalyseur comprenant, dans des proportions bien déterminées (qui seront précisées plus loin), une zéolithe cristalline synthétique du type ferrisilicate, une matrice et au moins un ou plusieurs métaux ou/et oxydes de métaux particuliers du groupe VIII ou/et VIB de la classification périodique des éléments.

Ladite zéolithe cristalline synthétique de type ferrisilicate, appelée ferrizéosilite, ainsi que son procédé de préparation (synthèse en milieu fluorure) sont décrits dans la demande de brevet EP-A-0273816 au nom de la demanderesse.

Les zéolithes sont des tectosilicates cristallisés. Leur structure tridimensionnelle est contruite par un assemblage de tétraèdres $TO_4$, mettant en commun leurs sommets, deux tétraèdres différents n'ayant qu'un oxygène en commun.

D'une manière générale, la composition des zéolithes peut être représentée par la forumule brute $M_{2/n}O,Y_2O_3$, $xZO_2$ à l'état déshydraté et calciné. Z et Y représentent respectivement les éléments tétravalent et trivalent des tétraèdres $TO_4$ ; M représente un élément électropositif de valence n, tel qu'un alcalin ou alcalino-terreux.

De manière générale, les zéolithes sont préparées par cristallisation hydrothermale de mélanges réactionnels contenant des sources d'hydroxydes alcalins ou alcalino-terreux, de silice, et d'oxydes ou de sels d'éléments comme l'aluminium pouvant remplacer le silicium dans les tétraèdres.

L'adjonction au mélange réactionnel d'un structurant généralement organique, comme une amine ou un sel d'ammonium quaternaire, est souvent nécessaire pour l'élaboration de ladite zéolithe. Le pH de l'ensemble de la préparation est basique et généralement supérieur à 10. On admet que la concentration en ions $OH^-$ facilite la cristallisation de la zéolithe en assurant la dissolution des sources de silice, et, éventuellemnt des oxydes amphotères comme l'alumine, ainsi que le transfert des espèces solubles ainsi obtenues sur la zéolithe en voie de formation.

L'utilisation de l'anion fluorure $F^-$ lors de la synthèse permet notamment de contourner cette difficulté et de préparer un ferrisilicate cristallin dont la structure est analogue à celle des zéolithes de type MFI.

La zéolithe de type ferrisilicate contenue dans le catalyseur employé dans le procédé de déparaffinage selon l'invention est caractérisée par :

a/ la formule chimique approchée suivante :

$$M_{2/n}O, Fe_2O_3, xSiO_2$$

où M représente un proton résultant de la décomposition thermique des cations comme par exemple $NH_4$+ ou tétrapropyl ou tripropylammonium ou tétrapropylphosphonium, présents seuls ou en mélange dans le milieu de synthèse, et/ou un cation de métal non décomposable issu du milieu réactionnel comme par exemple les cations alcalins et/ou alcalino-terreux ou d'autres métaux précisés ci-après,

n est la valence de M,

x est un nombre compris entre 40 et 1000,

b/ un diagramme de diffraction des rayons X représenté dans le tableau 1 de la description, et

c/ une teneur en fluor comprise entre environ 0,01 et 1,6% en poids.

De plus, ladite zéolithe a été synthétisée en milieu fluorure.

Cette zéolithe peut présenter au moins une dimension des cristaux comprise entre 0,05 et 500 micromètres (1 μm= $10^{-6}$ mètre), généralement entre 0,1 et 200 micromètres et, de préférence, entre 0,5 et 120 micromètres. Elle possède habituellement un rapport molaire $SiO_2/Fe_2O_3$ compris entre 40 et 1000 et, de préférence, entre 50 et 750.

Elle est de préférence synthétisée de la manière suivante:

a/ on forme un mélange réactionnel en solution ayant un pH inférieur à environ 10 et comprenant de l'eau, au moins une source de silice, au moins une source de sel ferrique, au moins une source d'agent mobilisateur contenant des ions fluorures ($F^-$) et au moins une source d'agent structurant pouvant fournir des cations organiques, par exemple les cations tétrapropylammonium ($TPA^+$), tétrapropylphosphonium ($TPP^+$) et tripropylammonium ($TriPA^+$), ledit mélange ayant une composition, en termes de rapport molaire, comprise dans les intervalles de valeurs suivants :

| | |
|---|---|
| $SiO_2/Fe_2O_3$ | : 5-2000 |
| $F^-/SiO_2$ | : 0,04-4 |
| Cations organiques/$SiO_2$ | : 0,04-2 |
| $H_2O/SiO_2$ | : 6-500 |

b/ on maintient ledit mélange à une température de chauffage inférieure à 250°C jusqu'à ce qu'on obtienne un composé cristallin, et

c/ on calcine ledit composé à une température supérieure à 400°C, par exemple entre 450 et 900°C.

Les sources d'agent structurant pouvant fournir des cations organiques sont de préférence des cations tétrahydrocarbylammonium,trihydrocarbylammonium,tétrahydrocarbylphosphonium, hydrocarbyl étant avantageusement alkyle et de manière préférée propyle.

D'autres agents structurants ou chélatants peuvent être utilisés, comme reconnu dans l'art antérieur, notamment des composés ayant des fonctions amine, cétone, alcool, acide, par exemple des amino-alcools, des aminoacides, des polyalcools ou des amines tertiaires.

On peut avantageusement chauffer le mélange dans un autoclave revêtu intérieurement de polytétrafluoroéthylène (PTFE) entre environ 60 et 210°C et, de préférence, entre 70 et 190°C pendant une durée qui peut varier de 0,5 à 1100 heures selon la température de réaction, jusqu'à l'obtention d'un solide cristallisé que l'on sépare des eaux-mères par filtration et qui est ensuite lavé à l'eau distillée.

De manière avantageuse, on peut préparer le mélange réactionnel à un pH compris entre environ 2,5 et environ 10 et de manière préférée entre 4 et 8.

Les rapports molaires des constituants du mélange réactionnel sont de préférence compris dans les intervalles (exprimés en rapports molaires) suivants :

| | |
|---|---|
| $SiO_2/Fe_2O_3$ | : 10-1000 |
| $F^-/SiO_2$ | : 0,1-1,5 |
| Cations organiques/$SiO_2$ | : 0,08-1 |
| $H_2O/SiO_2$ | : 15-350. |

On peut ajouter audit mélange réactionnel au moins un sel complémentaire dans un rapport molaire sel complémentaire/$SiO_2$ compris généralement entre environ 0,1 et 4 et, de préférence, entre 0,2 et 0,5 et/ou au moins un germe de cristal de la zéolithe formée par le procédé ci-dessus dans un rapport pondéral cristal/$SiO_2$ compris généralement entre 0,01 et 0,1 et, de manière préférée, entre environ 0,02 et 0,03, de telle sorte que la morphologie, la taille des cristaux ainsi que la cinétique de la réaction de cristallisation peuvent être avantageusement contrôlées.

On calcine avantageusmeent les cristaux de ladite zéolithe à une température comprise entre environ 520 et 590°C sous atmosphère de gaz sec, comme par exemple de l'air ou un gaz inerte, de façon à décomposer l'agent structurant présent dans les pores de la zéolithe.

La méthode de synthèse décrite précédemment s'applique à la préparation de zéolithes de la famille des pentasils et s'apparentant aux zéolithes du type MFI, tout en se distinguant de ces dernières par des particularités des diagrammes de diffraction des rayons X et des compositions chimiques.

Les différents inconvénients liés aux méthodes de préparation de zéolithes du type ferrisilicate en milieu basique disparaissent quand on effectue les synthèses dans des milieux aqueux avec un pH généralement inférieur à 10 et contenant des ions fluorures. Ainsi, les cations dérivés des métaux alcalins ou alcalino-terreux peuvent être remplacés par des cations $NH_4$+ avec tous les avantages découlant de l'utilisation de ces derniers cations. La solubilisation des sources de silice et de fer est assurée par les ions fluorures qui constituent l'agent mobilisateur et qui remplacent ainsi les ions hydroxyles des milieux basiques. Dans ces conditions, on peut obtenir des cristaux de zéolithes du type ferrisilicate ayant des rapports molaires $SiO_2/Fe_2O_3$ généralement compris entre environ 40 et 1000. Lesdits cristaux ont des dimensions qui peuvent être contrôlées à partir des différents paramètres de synthèse (concentration des réactifs, agitation, température, durée), les dimensions desdits cristaux pouvant varier entre 0,05 micromètres et 500 micromètres.

Lors de la synthèse de ladite ferrizéosilite, on peut travailler avantageusement en milieu agité, ce qui permet de diminuer considérablement le temps de réaction.

Le pH du milieu réactionnel, inférieur à 10, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer les silices sous forme d'hydrogels, d'aérogels, de suspensions colloïdales ainsi que les silices résultant de la précipitation de solutions de silicates solubles ou de l'hydrolyse d'esters siliciques comme l'ester tétraéthylique de l'acide orthosilicique $Si(OC_2H_5)_4$ ou de complexes comme la fluosilicate de sodium $Na_2SiF_6$ ou d'ammonium $(NH_4)SiF_6$.

Parmi les sels ferriques utilisés, on choisira de préférence le chlorure ferrique hydraté ou non, $FeCl_36H_2O$ ou $FeCl_3$, le nitrate ferrique nonahydraté $Fe(NO_3)_39H_2O$, le sulfate ferrique pentahydraté ainsi que le perchlorate ferrique. Par ailleurs, au lieu de partir de sources séparées de silice et d'un sel ferrique, on peut également prendre des sources où les deux éléments sont combinés, comme par exemple un gel ferrisilicaté fraîchement précipité.

Les anions fluorures $F^-$ peuvent généralement être introduits sous forme de sels desdits agents structurants ou d'ammonium ou de métaux alcalins comme par exemple NaF, $NH_4F$, $NH_4HF_2$, TriPA-F, TPA-F, TPP-F, ou sous forme de composés hydrolysables pouvant libérer des anions fluorures dans l'eau comme le fluorure de silicium $SiF_4$ ou le fluosilicate d'ammonium $(NH_4)_2SiF_6$ ou de sodium $Na_2SiF_6$.

Les cations $TPA^+$, $TPP^+$ ou $TriPA^+$, qui sont les agents structurants, sont ajoutés de préférence sous forme de leurs sels, par exemple les bromures, les fluorures, etc, mais on peut ajouter aussi les amines correspondantes (tripropylamine par exemple), que l'on salifie ensuite par de l'acide, fluorhydrique par exemple.

Les acides ou sels acides, les bases ou sels basiques ajoutés éventuellement en complément pour amener le pH du milieu à la valeur désirée peuvent être choisis parmi les acides courants comme par exemple HF, HCl, $HNO_3$, $H_2SO_4$, $CH_3COOH$ ou les sels acides comme par exemple $NH_4HF_2$, $KHF_2$, $NaHSO_4$, $KHSO_4$, les bases courantes comme par exemple $NaHCO_3$, $Na_2CO_3$, $CH_3COONa$, $Na_2S$, NaHS ou les mélanges tampons comme par exemple ($CH_3COOH$, $CH_3COONa$) ou ($NH_4OH$, $NH_4Cl$).

L'évolution de la composition au sein des cristaux de ferrizéosilites peut être avantageusement modulée, d'une part selon les sources de silice et du sel ferrique utilisées et d'autre part selon les rapports silice/fer engagés.

L'identification des ferrizéosilites peut se faire de manière aisée à partir de leur diagramme de diffraction des rayons X. Ce diagramme de diffraction peut être obtenu à l'aide d'un diffractomètre en utilisant la méthode classique des poudres avec le rayonnement $K\alpha$ du cuivre. Un étalon interne permet de déterminer précisément les valeurs des angles $2\theta$ associés aux pics de diffraction. Les différentes distances interréticulaires $d_{hkl}$, caractéristiques de l'échantillon, sont calculées à partir de la relation de BRAGG. L'estimation de l'erreur de mesure $\Delta$ ($d_{hkl}$) sur $d_{hkl}$ se calcule, en fonction de l'erreur absolue $\Delta(2\theta)$ affectée à la mesure de $2\theta$, par la relation de BRAGG. En présence d'un étalon interne, cette erreur est minimisée et prise couramment égale à $\pm$ 0,05°. L'intensité relative I/Io affectée à chaque valeur de $d_{hkl}$ est estimée à partir de la hauteur du pic de diffraction correspondant. On utilise souvent une échelle de symboles pour caractériser cette intensité : FF = très forte, F = forte, mF = moyenne à forte, m = moyenne, mf = moyenne a faible, f = faible, ff = très faible.

Le tableau 1 représente ainsi le diagramme de diffraction des rayons X caractéristique des zéolithes du type ferrisilicate obtenues selon la méthode de synthèse décrite précédemment et calcinées à 550°C. Dans la colonne des $d_{hkl}$ on a représenté les valeurs extrêmes que peuvent prendre les différentes équi-distances réticulaires $d_{hkl}$ (données en Angströms). La colonne "o" correspond à une ferrizéosilite cristallisant dans le système orthorhombique (Si/Fe faible), la colonne "m" correspond à une ferrizéosilite cristallisant dans le système monoclinique (Si/Fe élevé). Les variations observées sont esentiellement liées à la nature des cations de compensation et au rapport Si/Fe de la zéolithe. Chacune de ces valeurs doit être affectée de l'erreur de mesure $\Delta$(dhkl) comprise entre $\pm$ 0,07 et $\pm$ 0,002 selon la valeur de $2\theta$.(1 Angström = $10^{-10}$ mètre).

Le catalyseur utilisé dans le procédé de déparaffinage selon la présente invention renferme :

a/ 2 à 99,4% , de préférence 9 à 85%, en poids d'une zéolithe cristalline synthétique du type ferrisilicate qui a été décrite précédemment, ladite zéolithe ayant donc comme formule chimique approchée $M_{2/n}O$, $Fe_2O_3$, $xSiO_2$ dans laquelle M représente un proton et/ou un cation métallique, n est la valence de M et x est un nombre compris entre 40 et 1000, ladite zéolithe ayant été synthétisée en milieu fluorure et ayant une teneur en fluor comprise entre environ 0,01 et 1,6% en poids, ladite zéolithe ayant un diagramme de diffraction des rayons X représenté dans le tableau 1 de la description,

b/ 0,1 à 97,5%, de préférence 9 à 85%, en poids d'une matrice, et

c/ au moins un promoteur choisi dans le groupe constitué par :

Pd à une concentration pondérale comprise entre 0,05 et 5%, de préférence entre 0,1 et 3%
Pt à une concentration pondérale comprise entre 0,05 et 5%, de préférence entre 0,1 et 3%
NiO à une concentration pondérale comprise entre 0,5 et 16%, de préférence entre 2 et 10%
CoO à une concentration pondérale comprise entre 0,5 et 16%, de préférence entre 2 et 10%
$MoO_3$ à une concentration pondérale comprise entre 0,1 et 30%, de référence entre 6 et 25%
$WO_3$ à une concentration pondérale comprise entre 0,1 et 40%, de préférence entre 6 et 30% .

Ladite zéolithe cristalline synthétique du type ferrisilicate est donc mise en forme en utilisant une matrice ou liant qui peut être inerte ou actif pour la réaction à promouvoir. La matrice que l'on emploie dans le catalyseur du procédé selon l'invention est habituellement choisie dans le groupe formé par les argiles, les alumines, la silice, la magnésie, la zircone, l'oxyde de titane, l'oxyde de bore et toute combinaison d'au moins deux des composés précités, comme la silice-alumine, la silice-magnésie etc... Toutes les méthodes connues d'agglomération et de mise en forme sont applicables, telles que par exemple l'extrusion, le pastillage, la coagulation en goutte etc...

Le catalyseur contient une fonction hydrogénante qui est à base d'au moins un des métaux précédemment définis, à savoir le palladium et le platine ou/et d'au moins un des oxydes métalliques suivants : NiO, CoO, $MoO_3$, $WO_3$. On utilisera de préférence comme promoteur un des couples suivants d'oxydes métalliques : $MoO_3$-NiO, $WO_3$-NiO, $MoO_3$-CoO, avec des rapports pondéraux $MoO_3$/NiO, $WO_3$/NiO, $MoO_3$/CoO habituellement compris entre 0,5 et 9,5 et, de préférence, entre 1,5 et 8.

Le promoteur est habituellement déposé par imprégnation du support (zéolithe + matrice) par des solutions de sels métalliques tels que par exemple acétate, nitrate ou chlorure pour le nickel et le cobalt, nitrate ou chlorure de métal tétrammine pour le palladium et le platine, molybdate ou tungstates d'ammonium. Dans le cas des couples d'oxydes métalliques $MoO_3$-NiO, $WO_3$-NiO et $MoO_3$-CoO, le sel de nickel ou de cobalt peut être déposé après une première imprégnation du support par la solution du sel du métal du groupe VI B, suivie d'une calcination entre 200 et 550°C, mais peut être aussi déposé en même temps que le sel du métal du groupe VI B. Après la dernière imprégnation, le catalyseur est généralement séché entre 80 et 300°C, puis calciné entre 350 et 700°C et, de préférence, entre 420 et 600°C.

Le catalyseur utilisé dans la présente invention peut contenir du phosphore, la quantité de phosphore exprimée en poids d'oxyde $P_2O_5$ par rapport au poids de catalyseur étant comprise entre 0,1 et 15% et, de préférence, entre 1 et 10%. Le phosphore est présent avantageusement notamment lorsqu'il est associé aux oxydes de nickel et de molybdène. Il peut alors être introduit simultanément avec le nickel et le molybdène, par exemple sous la forme d'acide phosphorique de formule $H_3PO_4$.

Les conditions opératoires du procédé de déparaffinage d'hydrocarbures (par exemple d'un gas-oil) selon l'invention, procédé dans lequel est utilisé ledit catalyseur, sont de préférence les suivantes :

. Pression entre 0,5 et 10 MPa et, de préférence, entre 1 et 7 MPa.
. Température entre 200 et 500°C et, de préférence, entre 250 et 430°C.
. Vitesse spatiale, exprimée en volume de charge par unité de volume de catalyseur et par heure, entre 0,1 et 4 et, de préférence, entre 0,3 et 2.
. Rapport volumique $H_2$/hydrocarbures (par exemple $H_2$/gas-oil) compris entre 100 et 1500 litres par litre et, de préférence, entre 200 et 1000 litres par litre.

Le procédé selon l'invention peut consister notamment à améliorer la tenue au froid d'un gas-oil atmosphérique ou d'un gas-oil sous vide caractérisé par un point initial compris entre 200 et 420°C et un point final compris entre 320 et 650°C, une teneur en soufre comprise entre 0,1 et 3,5% en poids et ayant des points d'écoulement et de trouble supérieurs à 0°C.

Le procédé selon l'invention dans les conditions décrites ci-dessus permet des améliorations de point d'écoulement et de point de trouble supérieurs à 10°C. Dans le cas où le catalyseur contient les couples d'oxydes $MoO_3$-NiO, $WO_3$-NiO ou/et $MoO_3$-CoO, des taux de désulfuration supérieurs à 90% peuvent être atteints.

<u>**TABLEAU 1**</u>

| $d_{hkl}$ | | | I/Io | $d_{hkl}$ | | | I/Io |
|---|---|---|---|---|---|---|---|
| o | | m | | o | | m | |
| 11,14 | - | 11,10 | FF | 3,44 | - | 3,45 | mf |
| 9,99 | - | 9,92 | FF | | - | 3,43 | mf |
| 9,76 | - | 9,76 | mF | 3,38 | - | 3,37 | ff |
| 9,02 | - | 9,00 | f | 3,353 | - | 3,353 | mF |
| 8,08 | - | 8,03 | ff | 3,321 | - | 3,313 | mF |
| 7,45 | - | 7,42 | f | 3,247 | - | 3,254 | f |
| 7,10 | - | 7,06 | ff | 3,133 | - | 3,131 | ff |
| 6,72 | - | 6,69 | f | | | 3,058 | m |
| 6,38 | - | 6,36 | m | 3,052 | - | | m à mf |
| 6,03 | - | 5,99 | mF | | | 3,036 | m |
| 5,95 | - | 5,93 | mF | 2,990 | - | 2,986 | m |
| | | 5,72 | m | | | 2,955 | mf |
| 5,70 | | | m | 2,942 | | | mf |
| | | 5,68 | m | | | 2,921 | ff |
| 5,57 | - | 5,57 | m | 2,866 | - | 2,864 | ff |
| 5,38 | - | 5,38 | ff | 2,783 | - | 2,782 | ff |
| | | 5,33 | ff | 2,733 | - | 2,733 | f |
| 5,15 | - | 5,13 | ff | 2,685 | - | 2,679 | ff |
| 5,04 | - | 5,03 | m | 2,662 | - | 2,660 | ff |
| 4,99 | - | 4,97 | mF | | | 2,613 | f |
| 4,88 | - | 4,88 | ff | 2,605 | - | | f |
| 4,62 | - | 4,62 | mf | | | 2,589 | f |
| 4,46 | - | 4,40 | ff | 2,510 | - | 2,513 | f |
| 4,37 | - | 4,36 | mf | 2,488 | - | 2,484 | mf |
| 4,27 | - | 4,26 | m | 2,455 | - | 2,457 | ff |
| 4,09 | - | 4,08 | ff | 2,441 | - | 2,441 | ff |
| 4,01 | - | 4,01 | f | 2,416 | - | 2,413 | f |
| 3,86 | - | 3,85 | FF | 2,395 | - | 2,392 | f |
| 3,82 | - | 3,82 | FF | 2,325 | - | 2,324 | ff |
| | | 3,80 | FF | 2,275 | - | 2,274 | ff |
| | | 3,76 | F | 2,203 | - | 2,202 | ff |
| 3,75 | - | 3,74 | F | 2,011 | - | 2,011 | m à mf |
| 3,72 | - | 3,71 | F | 1,992 | - | 1,987 | mF |
| | | 3,66 | mF | | | | |
| 3,65 | - | 3,62 | mF | | | | |
| 3,56 | - | 3,56 | ff | | | | |
| 3,49 | - | 3,49 | f | | | | |

("o" ferrizéosilite orthorhombique; "m" ferrizéosilite monoclinique)

On peut éventuellement réaliser un prétraitement de la charge d'hydrocarbures consistant par exemple en un hydrotraitement partiel de la charge (notamment des réactions d'hydrodésulfuration, hydrodésazotation et hydrogénation des aromatiques contenus dans la charge) à l'aide d'un catalyseur adéquat, par exemple à base de nickel et de molybdène déposés sur alumine.

Les exemples suivants illustrent la présente invention sans toutefois en limiter la portée.

EXEMPLE 1 : Préparation d'une ferrizéosilite (solide Z) conforme à celle employée dans l'invention.

On prépare une solution contenant 18,80 g de chlorure ferrique hexahydraté, 59,25 g de bromure de tétrapropylammonium (TPABr) et 51,50 g de fluorure d'ammonium dans 5 litres d'eau. On mélange cette solution à 167,15 g de silice pulvérulente, obtenue par pyrohydrolyse du tétrachlorure de silicium et commercialisée par la société Degussa sous le nom "Aerosil". Celle-ci contient 3% en masse d'eau environ et moins de 0,002% en poids d'aluminium.

Le mélange (pH= 6) est chauffé pendant 15 jours à 170°C dans un autoclave. La suspension finale (pH=6) est filtrée et le solide lavé à l'eau, séché, puis calciné à 550°C sous un mélange de 20% d'air dans 80% d'azote pendant 9 heures.

L'analyse par diffraction des rayons X du produit calciné réhydraté montre qu'il s'agit d'une ferrizéosilite (solide Z) caractérisée par le diagramme de diffraction du tableau 1. L'analyse chimique de cette ferrizéosilite donne une teneur en fer de 2,05% et en élément fluor de 0,06% en poids et un rapport molaire $SiO_2/Fe_2O_3$ égal à 84.

EXEMPLE 2 : Préparation d'une zéolithe de type MFI non fluorée (solide Z').

On synthétise en milieu basique une zéolithe de structure MFI de rapport Si/Fe = 25 et on prépare la forme H suivant les techniques connues de l'art antérieur et décrites notamment dans le brevet allemand DE 2831611 et le brevet européen EP 115031.

EXEMPLE 3 : Préparation d'une zéolithe de type MFI fluorée non conformément à celle employée dans l'invention (solide Z").

Le solide Z' (obtenu à l'exemple 2) est soumis à un traitement à 450°C sous une atmosphère contenant $CHF_3$ pendant 4 heures. Sa teneur en fluor à l'issue de ce traitement est de 0,15% en poids et son spectre de diffraction, conforme aux indications du tableau 1, montre que le produit est encore bien cristallisé. Ce produit est référencé Z".

EXEMPLE 4 : Fabrication de catalyseurs.

Des catalyseurs sont fabriqués à partir des solides Z,Z' et Z" dont la préparation est décrite respectivement dans les exemples 1, 2 et 3.

Chaque solide Z, Z' et Z" est mélangé à un gel d'alumine de type CATAPAL (commercialisé par la société CONDEA) dans une proportion de poids sec 40% solide Z (ou Z' ou Z") - 60% alumine. Le mélange est malaxé puis extrudé en grains de diamètre de 1,6 millimètre. Les grains obtenus sont séchés à 120°C pendant 15 heures, puis calcinés sous air à 550°C pendant 2 heures.

On obtient : . un support S renfermant la zéolithe Z
. " S' " " " Z'
. " S" " " " Z".

1. Première série de catalyseurs (conformes à ceux employés dans l'invention).

a/ Le support S est imprégné par une solution aqueuse d'heptamolybdate d'ammonium, puis séché à 120°C et calciné à 350°C. Il est ensuite imprégné par une solution aqueuse de nitrate de nickel, séché puis calciné à 500°C, de manière à obtenir un catalyseur renfermant en poids 3% de NiO et 8% de $MoO_3$ (catalyseur C).

b/ On répète a/ mais de manière à obtenir un catalyseur renfermant en poids 8% de NiO et 16% de $MoO_3$ (catalyseur D).

c/ Le support S est imprégné par une solution aqueuse de métatungstate d'ammonium, puis séché à 120°C et calciné à 350°C. Il est ensuite imprégné par une solution aqueuse de nitrate de nickel, séché puis calciné à 500°C, de manière à obtenir un catalyseur renfermant en poids 3% de NiO et 8% de $WO_3$ (catalyseur $C_1$).

d/ On répète c/ mais de manière à obtenir un catalyseur renfermant en poids 8% de NiO et 16% de $WO_3$ (catalyseur $D_1$).

e/ Le support S est imprégné par une solution aqueuse d'heptamolybdate d'ammonium, puis séché à 120°C et calciné à 350°C. Il est ensuite imprégné par une solution aqueuse de nitrate de cobalt, séché puis calciné à 500°C, de manière à obtenir un catalyseur renfermant en poids 3% de CoO et 8% de $MoO_3$ (catalyseur $C_2$).
f/ On répète e/ mais de manière à obtenir un catalyseur renfermant en poids 8% de CoO et 16% de $MoO_3$ (catalyseur $D_2$).
g/ Le support S est imprégné par une solution aqueuse de chlorure de palladium tétrammine, séché puis calciné à 430°C, de manière à obtenir un catalyseur renfermant en poids 0,4% de Pd (catalyseur $C_3$).
h/ Le support S est imprégné par une solution aqueuse de chlorure de platine tétrammine, séché puis calciné à 450°C, de manière à obtenir un catalyseur renfermant en poids 0,4% de Pt (catalyseur $C_4$).
i/ Le support S est imprégné par un mélange d'une solution aqueuse d'heptamolybdate d'ammonium et d'une solution aqueuse d'acide phosphorique, puis séché à 120°C et calciné à 350°C. Il est ensuite imprégné par une solution aqueuse de nitrate de nickel, séché puis calciné à 500°C, de manière à obtenir un catalyseur renfermant en poids 3% de NiO, 8% de $MoO_3$ et 2% de $P_2O_5$ (catalyseur $C_5$).

2. Deuxième série de catalyseurs (non conformes à ceux employés dans l'invention).

On répète respectivement 1.a/, 1.c/ et 1.g/ en remplaçant le support S par le support S' et on obtient des catalyseurs renfermant en poids respectivement 3% de NiO et 8% de $MoO_3$ (catalyseur C'), 3% de NiO et 8% de $WO_3$ (catalyseur $C'_1$), 0,4% de Pd (catalyseur $C'_2$).

3. Troisième série de catalyseur (non conformes à ceux employés dans l'invention).

On répète respectivement 1.a/, 1.c/ et 1.g/ en remplacant le support S par le support S" et on obtient des catalyseurs renfermant en poids respectivement 3% de NiO et 8% de $MoO_3$ (catalyseur C"), 3% de NiO et 8% de $WO_3$ (catalyseur $C''_1$), 0,4% de Pd (catalyseur $C''_2$).

4. Quatrième série de catalyseurs (non conformes à ceux employés dans l'invention).

a/ Le support S est imprégné par une solution d'acide chromique, puis séché à 120°C et calciné à 350°C. Il est ensuite imprégné par une solution aqueuse de nitrate de nickel, séché puis calciné à 500°C, de manière à obtenir un catalyseur renfermant en poids 3% de NiO et 8% de $Cr_2O_3$ (catalyseur E).
b/ Le support S est imprégné par une solution d'acide chromique, puis séché à 120°C et calciné à 350°C. Il est ensuite imprégné par une solution aqueuse de nitrate de cobalt, séché puis calciné à 500°C, de manière à obtenir un catalyseur renfermant en poids 8% de CoO et 16% de $Cr_2O_3$ (catalyseur $E_1$).
c/ Le support S est imprégné par une solution aqueuse d'heptamolybdate d'ammonium, puis séché à 120°C et calciné à 350°C. Il est ensuite imprégné par une solution aqueuse de nitrate de fer, séché puis calciné à 500°C, de manière à obtenir un catalyseur renfermant en poids 3% de FeO et 8% de $MoO_3$ (catalyseur $E_2$).
d/ Le support S est imprégné par une solution aqueuse de métatungstate d'ammonium, puis séché à 120°C et calciné à 350°C. Il est ensuite imprégné par une solution aqueuse de nitrate de fer, séché puis calciné à 500°C, de manière à obtenir un catalyseur renfermant en poids 8% de FeO et 16% de $WO_3$ (catalyseur $E_3$).

**TABLEAU 2** : Composition des catalyseurs préparés dans l'exemple 4.

| (**) CATALYSEUR | COMPOSITION (% POIDS) | | | | | | | | | | | |
|---|---|---|---|---|---|---|---|---|---|---|---|---|
| | SUPPORT(*) | | | METAUX OU OXYDES DE METAUX | | | | | | | | |
| | S | S' | S" | Pd | Pt | NiO | CoO | FeO | $CrO_3$ | $MoO_3$ | $WO_3$ | $P_2O_5$ |
| C | 89 | - | - | - | - | 3 | - | - | | 8 | - | - |
| D | 76 | - | - | - | - | 8 | - | - | | 16 | - | - |
| $C_1$ | 89 | - | - | - | - | 3 | - | - | - | - | 8 | - |
| $D_1$ | 76 | - | - | - | - | 8 | - | - | - | - | 16 | - |
| $C_2$ | 89 | - | - | - | - | - | 3 | - | - | 8 | - | - |
| $D_2$ | 76 | - | - | - | - | - | 8 | - | - | 16 | - | - |
| $C_3$ | 99,6 | - | - | 0,4 | - | - | - | - | - | - | - | - |
| $C_4$ | 99,6 | - | - | - | 0,4 | - | - | - | - | - | - | - |
| $C_5$ | 87 | - | - | - | - | 3 | - | - | - | 8 | - | 2 |
| C' | - | 89 | - | - | - | 3 | - | - | - | 8 | - | - |
| $C'_1$ | - | 89 | - | - | - | 3 | - | - | - | - | 8 | - |
| $C'_2$ | - | 99,6 | - | 0,4 | - | - | - | - | - | - | - | - |
| C" | - | - | 89 | - | - | 3 | - | - | - | 8 | - | - |
| $C''_1$ | - | - | 89 | - | - | 3 | - | - | - | - | 8 | - |
| $C''_2$ | - | - | 99,6 | 0,4 | - | - | - | - | - | - | - | - |
| E | 89 | - | - | - | - | 3 | - | - | 8 | - | - | - |
| $E_1$ | 76 | - | - | - | - | - | 8 | - | 16 | - | - | - |
| $E_2$ | 89 | - | - | - | - | - | - | 3 | - | 8 | - | - |
| $E_3$ | 76 | - | - | - | - | - | - | 8 | - | - | 16 | - |

(*) :Support S = 60% alumine + 40% ferrizéosilite (fluorée lors de sa synthèse)

Support S'= 60% alumine + 40% zéolithe type MFI (non fluorée)

Support S"= 60% alumine + 40% zéolithe type MFI (fluorée par fluoration)

(% en poids par rapport à la masse totale du support).

(**) : Seuls les catalyseurs C, $C_1$ à $C_5$, D, $D_1$ et $D_2$ sont conformes à ceux employés dans la présente invention.

EXEMPLE 5 : Test de déparaffinage catalytique.

Tous les catalyseurs (voir tableau 2) dont la préparation est décrite dans l'exemple précédent sont soumis à un test de déparaffinage d'un gas-oil. Les caractéristiques de la charge sont données dans le tableau 3.

Les essais sont réalisés dans les conditions suivantes :

. Pression totale : 45 bars (4,5 MPa).

. Température variable entre 360 et 380°C.

. Vitesse spatiale d'alimentation (VVH) en volume de charge par unité de volume de catalyseur et par heure = 0,5.

. Rapport volumique $H_2$/gas-oil = 300 litres d'hydrogène gazeux/litre de charge liquide.

Le système catalytique est constitué pour moitié d'un catalyseur d'hydrotraitement placé en tête de lit et pour moitié du catalyseur à tester. Le premier catalyseur réalise un hydrotraitement partiel de la charge, notamment les réactions d'hydrodésulfuration, hydrodésazotation et hydrogénation des aromatiques. Le second doit assurer aussi partiellement ces réactions et surtout réaliser le déparaffinage catalytique sur une charge déjà partiellement purifiée. Le catalyseur de première étape utilisé est le HR 348 commercialisé par la société PROCATALYSE; il est constitué de nickel et de molybdène déposés sur alumine.

## TABLEAU 3

## CARACTERISTIQUES DE LA CHARGE GAS-OIL

| | | |
|---|---|---|
| Distillation ASTM D2887 (°C) | Point initial | 258 |
| | 10 % | 302 |
| | 30 % | 327 |
| | 50 % | 352 |
| | 70 % | 381 |
| | 90 % | 429 |
| | Point final | 455 |
| Densité | à 20°C | 0,893 |
| Soufre (% poids) | | 1,28 |
| Azote (% poids) | | 350 |
| Point d'écoulement (°C) | | +18 |
| Point de trouble (°C) | | +19 |

Le test est opéré de la manière suivante. Après chargement des catalyseurs, ceux-ci sont présulfurés par le mélange de sulfure d'hydrogène et d'hydrogène. Puis la pression est portée à 45 bars, et la charge est injectée à 150°C et portée progressivement à 360°C. Après 48 heures à cette température, celle-ci est portée à 380°C pendant 48 heures.

Les performances des catalyseurs, rassemblées dans les tableaux 4 à 6, sont exprimées à l'aide des caractéristiques suivantes:

. Rendement pondéral en coupe $170^+$ (Rdt $170^+$).

. Point de trouble et point d'écoulement de la coupe $170^+$. Le point de trouble correspond à la température à laquelle apparaissent les premiers cristaux de paraffines. Le point d'écoulement correspond à la température de prise en masse du solide.

**TABLEAU 4**

| CATALYSEURS(*) | Point d'écoulement | | Point de trouble | | Rdt 170 + (% poids) | |
|---|---|---|---|---|---|---|
| | 360 | 380 | 360 | 380 | 360 | 380 |
| C | -21 | -36 | -5 | -13 | 90 | 87 |
| D | -18 | -36 | -3 | -10 | 88 | 86 |
| $C_1$ | -15 | -30 | -3 | -7 | 89 | 85 |
| $D_1$ | -15 | -30 | -4 | -10 | 88 | 83 |
| $C_2$ | -12 | -21 | -6 | -11 | 89 | 85 |
| $D_2$ | -3 | -18 | -3 | -8 | 88 | 85 |
| $C_3$ | -6 | -15 | -5 | -12 | 89 | 85 |
| $C_4$ | -9 | -18 | -10 | -13 | 89 | 82 |
| $C_5$ | -22 | -37 | -6 | -13 | 91 | 88 |

(*) Les catalyseurs C, $C_1$ à $C_5$, D, $D_1$ et $D_2$ sont conformes à ceux employés dans la présente invention.

**TABLEAU 5**

| CATALYSEURS | Point d'écoulement | | Point de trouble | | Rdt 170⁺ (% pods) | |
|---|---|---|---|---|---|---|
| | 360 | 380 | 360 | 380 | 360 | 380 |
| C | -21 | -36 | -5 | -13 | 90 | 87 |
| C' | -15 | -30 | -3 | -6 | 90 | 87 |
| C" | -18 | -30 | -3 | -8 | 86 | 82 |
| $C_1$ | -15 | -30 | -3 | -7 | 89 | 85 |
| $C'_1$ | -12 | -21 | -1 | -5 | 88 | 85 |
| $C"_1$ | -15 | -24 | 0 | -6 | 85 | 82 |
| $C_3$ | -6 | -15 | -5 | -12 | 89 | 85 |
| $C'_1$ | -3 | -12 | -4 | -7 | 88 | 85 |
| $C"_2$ | -3 | -9 | -5 | -11 | 86 | 80 |

A la lecture du tableau 5, il apparaît qu'en présence d'un catalyseur contenant une zéolithe du type ferrisilicate synthétisée en milieu fluorure (respectivement C, $C_1$ et $C_3$), on obtient une nette amélioration des propriétés de tenue au froid du gas-oil et, en particulier, on atteint les points d'écoulement et de trouble les plus bas tout en ayant un excellent rendement en coupe $170^+$, par rapport à un procédé en présence d'un catalyseur contenant une zéolithe de type MFI non fluorée (respectivement C', $C'_1$ et $C'_2$) ou une zéolithe de type MFI fluorée par fluoration donc par un traitement post-synthèse (respectivement C", $C"_1$ et $C"_2$).

TABLEAU 6

| CATALYSEURS | Point d'écoulement | | Point de trouble | | Rdt 170+ (% poids) | |
|---|---|---|---|---|---|---|
| | 360 | 380 | 360 | 380 | 360 | 380 |
| C | -21 | -36 | -5 | -13 | 90 | 87 |
| $C_1$ | -15 | -30 | -3 | -7 | 89 | 85 |
| E | -3 | -9 | 2 | -3 | 90 | 88 |
| $D_2$ | -3 | -18 | -3 | -8 | 88 | 85 |
| $E_1$ | -3 | -12 | 0 | -6 | 88 | 85 |
| C | -21 | -36 | -5 | -13 | 90 | 87 |
| $C_2$ | -12 | -21 | -6 | -11 | 89 | 85 |
| $E_2$ | 0 | -3 | 3 | 0 | 90 | 87 |
| $D_1$ | -15 | -30 | -4 | -10 | 88 | 83 |
| $E_3$ | -3 | -3 | 3 | 1 | 90 | 87 |

A la lecture du tableau 6, il apparaît qu'en présence d'un catalyseur contenant aussi des métaux ou oxydes de métaux du groupe VIII ou VIB autres que Pd, Pt, NiO, CoO, $MoO_3$, $WO_3$ (respectivement E (renfermant NiO et $CrO_3$), $E_1$ (renfermant CoO et $CrO_3$), $E_2$ (renfermant FeO et $MoO_3$), $E_3$ (renfermant FeO et $WO_3$)) les performances sont inférieures à celles obtenues en présence d'un catalyseur ne renfermant comme métaux ou oxydes de métaux que Pd, Pt, NiO, CoO, $MoO_3$ ou/et $WO_3$ (respectivement C ou $C_1$; $D_2$; C ou $C_2$; $D_1$).

Enfin, la présence de phosphore (voir catalyseur $C_5$) améliore encore les performances du catalyseur selon l'invention.

## Revendications

1. Procédé de déparaffinage d'hydrocarbures en présence d'au moins un catalyseur renfermant :
   a/ 2 à 99,4% en poids d'une zéolithe cristalline synthétique du type ferrisilicate, ladite zéolithe ayant comme formule chimique approchée $M_{2/n}O$, $Fe_2O_3$, $xSiO_2$ dans laquelle M représente un proton et/ou un cation métallique, n est la valence de M et x est un nombre compris entre 40 et 1000, ladite zéolithe ayant été synthétisée en milieu fluorure et ayant une teneur en fluor comprise entre environ 0,01 et 1,6% en poids, ladite zéolithe ayant un diagramme de diffraction des rayons X représenté dans le tableau 1 de la description,
   b/ 0,1 à 97,5% en poids d'une matrice, et
   c/ au moins un promoteur choisi dans le groupe constitué par :

| | | | | | | |
|---|---|---|---|---|---|---|
| Pd | à une | concentration | pondérale | comprise | entre | 0,05 et 5% |
| Pt | " | " | " | " | " | 0,05 et 5% |
| NiO | " | " | " | " | " | 0,5 et 16% |
| CoO | " | " | " | " | " | 0,5 et 16% |
| $MoO_3$ | " | " | " | " | " | 0,1 et 30% |
| $WO_3$ | " | " | " | " | " | 0,1 et 40%. |

2. Procédé selon la revendication 1 en présence d'au moins un catalyseur renfermant :
   a/ 9 à 85% en poids de ladite zéolithe,
   b/ 9 à 85% en poids de ladite matrice, et
   c/ au moins un promoteur choisi dans le groupe constitué par :

| | | | | | | |
|---|---|---|---|---|---|---|
| Pd | à une | concentration | pondérale | comprise | entre | 0,1 et 3% |
| Pt | " | " | " | " | " | 0,1 et 3% |
| NiO | " | " | " | " | " | 2 et 10% |
| CoO | " | " | " | " | " | 2 et 10% |
| $MoO_3$ | " | " | " | " | " | 6 et 25% |
| $WO_3$ | " | " | " | " | " | 6 et 30%. |

3. Procédé selon l'une des revendications 1 et 2 dans lequel ladite zéolithe possède un rapport molaire $SiO_2/Fe_2O_3$ compris entre 50 et 750.

4. Procédé selon l'une des revendications 1 à 3 dans lequel ladite matrice est choisie dans le groupe formé par la silice, la magnésie, la zircone, l'oxyde de titane, l'oxyde de bore, une alumine, une argile et toute combinaison d'au moins deux des composés précités.

5. Procédé selon l'une des revendications 1 à 4 dans lequel ledit catalyseur renferme au moins l'un des couples d'oxydes choisi dans le groupe constitué par $MoO_3$-NiO, $WO_3$-NiO et $MoO_3$-CoO.

6. Procédé selon l'une des revendications 1 à 5 dans lequel ledit catalyseur renferme le couple d'oxydes $MoO_3$-NiO dont le rapport pondéral $MoO_3$/NiO est compris entre 0,5 et 9,5.

7. Procédé selon l'une des revendications 1 à 5 dans lequel ledit catalyseur renferme le couple d'oxydes $WO_3$-NiO dont le rapport pondéral $WO_3$/NiO est compris entre 0,5 et 9,5.

8. Procédé selon l'une des revendications 1 à 5 dans lequel ledit catalyseur renferme le couple d'oxydes $MoO_3$-CoO dont le rapport pondéral $MoO_3$/CoO est compris entre 0,5 et 9,5.

9. Procédé selon l'une des revendications 1 à 8 dans lequel ledit catalyseur renferme en outre du phosphore en quantité exprimée en poids d'oxyde $P_2O_5$ par rapport au poids de catalyseur comprise entre 0,1 et 15%.

10. Procédé selon l'une des revendications 1 à 9 de déparaffinage d'un gas-oil atmosphérique ou d'un gas-oil sous-vide.

## Claims

1. A process for de-paraffining hydrocarbons in the presence of at least one catalyst including:
   a) 2 to 99.4% by weight of a synthetic crystalline zeolite of the ferrisilicate kind, said zeolite having the approximate chemical formula $M_2/nO$, $Fe_2O_3$, $xSiO_2$ wherein M represents a proton and/or a metal cation, n is the valency of M and x is a number between 40 and 1000, said zeolite having been synthesised in fluoride medium and having a fluorine content of between about 0.01 and 1.6% by weight, said zeolite having an X ray diffraction diagram shown in Table I of the description,

b) 0.1 to 97.5% by weight of a matrix, and

c) at least one promotor selected from the group formed by:

| | | | | | | | | |
|---|---|---|---|---|---|---|---|---|
| Pd | with a | concentration | by | weight | of | between | 0.05 | and 5% |
| Pt | " | " | " | " | " | " | 0.05 | and 5% |
| NiO | " | " | " | " | " | " | 0.5 | and 16% |
| CoO | " | " | " | " | " | " | 0.5 | and 16% |
| $MoO_3$ | " | " | " | " | " | " | 0.1 | and 30% |
| $WO_3$ | " | " | " | " | " | " | 0.1 | and 40%. |

**2.** A process according to Claim 1 in the presence of at least one catalyst including:

a) 9 to 85% by weight of said zeolite,

b) 9 to 85% by weight of said matrix, and

c) at least one promotor selected from the group formed by:

| | | | | | | | | |
|---|---|---|---|---|---|---|---|---|
| Pd | in a | concentration | by | weight | of | between | 0.1 | and 3% |
| Pt | " | " | " | " | " | " | 0.1 | and 3% |
| NiO | " | " | " | " | " | " | 2 | and 10% |
| CoO | " | " | " | " | " | " | 2 | and 10% |
| $MoO_3$ | " | " | " | " | " | " | 6 | and 25% |
| $WO_3$ | " | " | " | " | " | " | 6 | and 30%. |

**3.** A process according to one of Claims 1 and 2 wherein said zeolite has a $SiO_2/Fe_2O_3$ molar ratio of between 50 and 750.

**4.** A process according to one of Claims 1 to 3 wherein said matrix is selected from the group formed by silica, magnesia, zirconia, titanium oxide, boron oxide, an alumina, a clay and any combination of at least two of the afore-mentioned compounds.

**5.** A process according to one of Claims 1 to 4 wherein said catalyst includes at least one of the couples of oxides selected from the group formed by $MoO_3$-NiO, $WO_3$-NiO and $MoO_3$-CoO.

**6.** A process according to one of Claims 1 to 5 wherein said catalyst includes the couple of oxides $MoO_3$-NiO, the $MoO_3$/NiO weight ratio of which is between 0.5 and 9.5.

**7.** A process according to one of Claims 1 to 5 wherein said catalyst includes the couple of oxides $WO_3$-NiO, the $WO_3$/NiO weight ratio of which is between 0.5 and 9.5.

**8.** A process according to one of Claims 1 to 5 wherein said catalyst includes the couple of oxides $NoO_3$-CoO, the $MoO_3$/CoO weight ratio of which is between 0.5 and 9.5.

**9.** A process according to one of Claims 1 to 8 wherein said catalyst additionally includes phosphorus in an amount expressed by weight of $P_2O_5$ in relation to the weight of the catalyst of between 0.1 and 15%.

**10.** A process according to one of Claims 1 to 9 for de-paraffining an atmospheric gas oil or a vacuum gas-oil.

## Patentansprüche

1. Verfahren zur Entparaffinierung von Kohlenwasserstoffen in Gegenwart mindestens eines Katalysators, der enthält:
   a) 2 bis 99,4 Gew.-% eines synthetischen kristallinen Zeoliths vom Ferrisilicat-Typ mit etwa der folgenden chemischen Formel
   $$M_{2/n}O,\ Fe_2O_3,\ xSiO_2$$
   worin M ein Proton und/oder ein Metallkation, n die Valenz von M und x eine Zahl zwischen 40 und 1000 bedeuten, wobei der Zeolith in einem Fluoridmedium hergestellt worden ist und einen Fluorgehalt zwischen etwa 0,01 und 1,6 Gew.-% sowie ein Röntgenbeugungsdiagramm hat, wie es in der Tabelle 1 der Beschreibung dargestellt ist,
   b) 0,1 bis 97,5 Gew.-% einer Matrix (Träger) und
   c) mindestens einen Promotor, ausgewählt aus der Gruppe, die besteht aus:
   Pd in einer Gewichtskonzentration zwischen 0,05 und 5 %
   Pt in einer Gewichtskonzentration zwischen 0,05 und 5 %
   NiO in einer Gewichtskonzentration zwischen 0,5 und 16 %
   CoO in einer Gewichtskonzentration zwischen 0,5 und 16 %
   $MoO_3$ in einer Gewichtskonzentration zwischen 0,1 und 30 %
   $WO_3$ in einer Gewichtskonzentration zwischen 0,1 und 40 %

2. Verfahren nach Anspruch 1, das in Gegenwart mindestens eines Katalysators durchgeführt wird, der enthält:
   a) 9 bis 85 Gew.-% des genannten Zeoliths
   b) 9 bis 85 Gew.-% der genannten Matrix (Träger) und
   c) mindestens einen Promotor, ausgewählt aus der Gruppe, die besteht aus
   Pd in einer Gewichtskonzentration zwischen 0,1 und 3 %
   Pt in einer Gewichtskonzentration zwischen 0,1 und 3 %
   NiO in einer Gewichtskonzentration zwischen 2 und 10 %
   CoO in einer Gewichtskonzentration zwischen 2 und 10 %
   $MoO_3$ in einer Gewichtskonzentration zwischen 6 und 25 %
   $WO_3$ in einer Gewichtskonzentration zwischen 6 und 30 %

3. Verfahren nach einem der Ansprüche 1 und 2, bei dem der genannte Zeolith ein Molverhältnis $SiO_2/Fe_2O_3$ aufweist, das zwischen 50 und 750 liegt.

4. Verfahren nach einem der Ansprüche 1 bis 3, bei dem die genannte Matrix (Träger) ausgewählt wird aus der Gruppe, die besteht aus Siliciumdioxid, Magnesiumoxid, Zirkoniumoxid, Titanoxid, Boroxid, einem Aluminiumoxid, einem Tonmineral und jeder beliebigen Kombination von mindestens 2 der vorgenannten Verbindungen.

5. Verfahren nach einem der Ansprüche 1 bis 4, bei dem der genannte Katalysator mindestens eines der Oxidpaare enthält, die ausgewählt werden aus der Gruppe, bestehend aus $MoO_3$-NiO, $WO_3$-NiO und $MoO_3$-CoO.

6. Verfahren nach einem der Ansprüche 1 bis 5, bei dem der genannte Katalysator das Oxidpaar $MoO_3$-NiO enthält, dessen Gewichtsverhältnis $MoO_3$/NiO zwischen 0,5 und 9,5 liegt.

7. Verfahren nach einem der Ansprüche 1 bis 5, bei dem der genannte Katalysator das Oxidpaar $WO_3$-NiO enthält, dessen Gewichtsverhältnis $WO_3$/NiO zwischen 0,5 und 9,5 liegt.

8. Verfahren nach einem der Ansprüche 1 bis 5, bei dem der genannte Katalysator das Oxidpaar $MoO_3$-CoO enthält, dessen Gewichtsverhältnis $MoO_3$/CoO zwischen 0,5 und 9,5 liegt.

9. Verfahren nach einem der Ansprüche 1 bis 8, bei dem der genannte Katalysator außerdem Phosphor in einer Menge, ausgedrückt durch das Gewicht des Oxids $P_2O_5$, bezogen auf das Gewicht des Katalysators, zwischen 0,1 und 15 % enthält.

10. Verfahren nach einem der Ansprüche 1 bis 9 zur Entparaffinierung eines Atmosphärendruck-Gasöls oder eines Vakuum-Gasöls.